# EUROPEAN PATENT APPLICATION

(11) **EP 4 837 441 A1**
(43) Date of publication of application: **11.11.2026**
(21) Application number: 24915182.0
(22) Date of filing: 26.12.2024
(51) Int. Cl.: A24F 40/57, A24F 40/46, G05D 23/20

(54) **HEAT-NOT-BURN DEVICE AND HEATING CONTROL METHOD THEREFOR**

(30) Priority: 03.01.2024 CN 202410012551
(71) Applicant: Shenzhen Merit Technology Co., Ltd., Shenzhen, Guangdong 518105 (CN)
(72) Inventor: HUANG, Pengfei, Shenzhen, Guangdong 518105 (CN); DOU, Hengheng, Shenzhen, Guangdong 518105 (CN); GAO, Zi, Shenzhen, Guangdong 518105 (CN)
(74) Representative: Winter, Brandl - Partnerschaft mbB
(86) International application number: PCT/CN2024/142942
(87) International publication number: WO 2025/145967

(57) **Abstract**

The present disclosure relates to a heat not burn device and a heating control method therefor. The method includes: controlling, in a first stage, a heating assembly to heat an aerosol-generating substrate, to increase a temperature of the aerosol-generating substrate from an initial temperature to a first temperature; controlling, in a second stage, the heating assembly to stop heating the aerosol-generating substrate, to reduce the temperature of the aerosol-generating substrate from the first temperature; and controlling, in a third stage, the heating assembly to heat the aerosol-generating substrate, to increase the temperature of the aerosol-generating substrate from a current temperature to a third temperature. The third temperature is greater than or equal to the first temperature. The present disclosure can provide delivery of a time-invariant aerosol whose characteristic remains unchanged.

## Description

### TECHNICAL FIELD

The present disclosure relates to the field of electronic atomization, and in particular, to a heat not burn device and a heating control method therefor.

### BACKGROUND

In a heat not burn device, it is expected to generate a time-invariant aerosol. In particular, when the aerosol is consumed by humans, during continuous or repeated heating, a fluctuation amplitude of a heating temperature affects a change of an aerosol-generating material that carries nicotine and, in some cases, fragrances. As a result, delivery of a time-invariant aerosol whose characteristic remains unchanged cannot be provided.

### SUMMARY

A technical problem to be resolved in the present disclosure is to provide a heat not burn device and a heating control method therefor for a defect that delivery of a time-invariant aerosol whose characteristic remains unchanged cannot be provided.

A technical solution used in the present disclosure to resolve the technical problem is a heating control method for a heat not burn device. The heat not burn device includes a heating assembly. The method includes:
controlling, in a first stage, the heating assembly to heat an aerosol-generating substrate, to increase a temperature of the aerosol-generating substrate from an initial temperature to a first temperature;
controlling, in a second stage, the heating assembly to stop heating the aerosol-generating substrate, to reduce the temperature of the aerosol-generating substrate from the first temperature; and
controlling, in a third stage, the heating assembly to heat the aerosol-generating substrate, to increase the temperature of the aerosol-generating substrate from a current temperature to a third temperature, where the third temperature is greater than or equal to the first temperature.

Preferably, the temperature of the aerosol-generating substrate is increased with time in a form of a curve in the first stage;
the temperature of the aerosol-generating substrate is reduced in a form of a curve in the second stage; and
the temperature of the aerosol-generating substrate is increased in a form of a curve in the third stage.

Preferably, the step of controlling, in a second stage, the heating assembly to stop heating the aerosol-generating substrate, to reduce the temperature of the aerosol-generating substrate from the first temperature includes:
controlling, in the second stage, the heating assembly to stop heating the aerosol-generating substrate for a preset duration, to reduce the temperature of the aerosol-generating substrate from the first temperature through natural cooling; or
controlling, in the second stage, the heating assembly to stop heating the aerosol-generating substrate, to reduce the temperature of the aerosol-generating substrate from the first temperature to a second temperature.

Preferably, the method further includes:
controlling the heating assembly to heat the aerosol-generating substrate, to maintain the temperature of the aerosol-generating substrate within a preset allowable temperature range in the first stage and the third stage; and
controlling the heating assembly to stop heating the aerosol-generating substrate, to maintain the temperature of the aerosol-generating substrate within the allowable temperature range in the second stage.

Preferably, the allowable temperature range has an upper limit ranging from 450 °C to 500 °C and a lower limit ranging from 250 °C to 300 °C; and
the first temperature ranges from 300 °C to 450 °C.

Preferably, a duration of the first stage is less than 20 seconds;
a duration of the second stage is less than 2 seconds; and
the third stage extends from an end time of the second stage to a time point of 600 seconds.

In addition, the present disclosure further provides a heat not burn device, including:
a heating assembly configured to heat an aerosol-generating substrate;
a battery assembly configured to supply electrical power to the heating assembly; and
a control assembly, where the control assembly is configured to:
control, in a first stage, the heating assembly to heat the aerosol-generating substrate, to increase a temperature of the aerosol-generating substrate from an initial temperature to a first temperature;
control, in a second stage, the heating assembly to stop heating the aerosol-generating substrate, to reduce the temperature of the aerosol-generating substrate from the first temperature; and
control, in a third stage, the heating assembly to heat the aerosol-generating substrate, to increase the temperature of the aerosol-generating substrate from a current temperature to a third temperature, where the third temperature is greater than or equal to the first temperature.

Preferably, the heating assembly includes a housing and a heating body. The heating body is configured to generate, when energized and heated, infrared light for heating the aerosol-generating substrate. The heating body is at least partially disposed spaced away from a housing wall of the housing.

The housing allows the infrared light to pass through.

Preferably, the heating body is located in the housing. The heating body includes a heating substrate and an infrared radiation layer coated outside the heating substrate. The heating body is configured to activate, when energized, the infrared radiation layer to generate the infrared light. At least a part of the housing is configured to be inserted into the aerosol-generating substrate.

Alternatively, the heating body is disposed spaced away on an outer circumference of the housing, and the interior of the housing is hollow and forms a second accommodating cavity configured to accommodate the aerosol-generating substrate.

Preferably, the housing includes a first tube body and a second tube body sleeved on an outer circumference of the first tube body.

A gap exists between the first tube body and the second tube body, and the gap forms a first accommodating cavity for accommodating the heating body.

The heating body is disposed on the outer circumference of the first tube body and disposed spaced away from an outer wall of the first tube body. A second accommodating cavity configured to heat the aerosol-generating substrate is formed on an inner side of the first tube body.

The heating body includes a heating substrate and an infrared radiation layer coated outside the heating substrate. The heating assembly is configured to activate, when energized, the infrared radiation layer to generate the infrared light.

When the heat not burn device and the heating control method therefor in the present disclosure are implemented, at least the following beneficial effects are achieved: The heating assembly is controlled to stop heating the aerosol-generating substrate in the second stage, to reduce the temperature of the aerosol-generating substrate from the first temperature, so that burn-out can be avoided, and it can be ensured that the aerosol-generating substrate continuously generates an aerosol at an optimal temperature in an entire inhaling process. In addition, the temperature is increased again in the third stage, to increase a thermal conduction rate from the heating assembly to the aerosol-generating substrate. Therefore, delivery of a time-invariant aerosol whose characteristic remains unchanged can be provided.

### BRIEF DESCRIPTION OF THE DRAWINGS

The present disclosure is further described below with reference to the accompanying drawings and embodiments. In the accompany drawings:
FIG. 1 is a schematic flowchart of a heating control method for a heat not burn device according to Embodiment 1 of the present disclosure;
FIG. 2 is a schematic diagram of temperature distribution of an aerosol-generating substrate according to Embodiment 1 of the present disclosure;
FIG. 3 is a schematic diagram of a structure of a heat not burn device according to Embodiment 1 of the present disclosure;
FIG. 4 is a circuit diagram of a heat not burn device according to Embodiment 1 of the present disclosure;
FIG. 5 is a schematic diagram of a structure of a heating assembly according to Embodiment 1 of the present disclosure;
FIG. 6 is a cross-sectional view of the heating assembly shown in FIG. 5;
FIG. 7 is a schematic diagram of an exploded view of a structure of the heating assembly shown in FIG. 5;
FIG. 8 is a transverse cross-sectional view of a heating body shown in FIG. 7;
FIG. 9 is a schematic diagram of a structure of a heating assembly according to Embodiment 2 of the present disclosure;
FIG. 10 is a schematic diagram of a structure of the heating assembly shown in FIG. 9 from another perspective;
FIG. 11 is a cross-sectional view of the heating assembly shown in FIG. 9; and
FIG. 12 is a schematic diagram of an exploded view of a structure of the heating assembly shown in FIG. 9.

In the accompany drawings: 1-shell, 11-heating assembly, 3-battery assembly, 4-control assembly, 5-aerosol-generating substrate, 20-temperature measurement element, 111-housing, 112-heating body, 113-base, 1110-opening, 1111-tubular body, 1112-pointed-top structure, 1113-first accommodating cavity, 1114-gap, 1120-heating portion, 112d-first free end, 112e-second free end, 112a-first heating portion, 112b-second heating portion, 1121-conductive portion, 1122-heating substrate, 1124-infrared radiation layer, 1123-anti-oxidation layer, 111a-first tube body, 111b-second tube body, and 1115-second accommodating cavity.

### DETAILED DESCRIPTION

In order to have a clearer understanding of the technical features, objectives, and effects of the present disclosure, specific implementations of the present disclosure are now described in detail with reference to the accompanying drawings.

In the following descriptions, for the objective of illustration rather than limitation, specific details such as a particular system structure and technology are proposed to thoroughly understand embodiments of the present disclosure. However, it should be clear to a person skilled in the art that the present disclosure can still be implemented in other embodiments without these specific details. In other cases, detailed descriptions of a well-known system, apparatus, circuit, and method are omitted, so that the descriptions of the present disclosure are not obscured with unnecessary details.

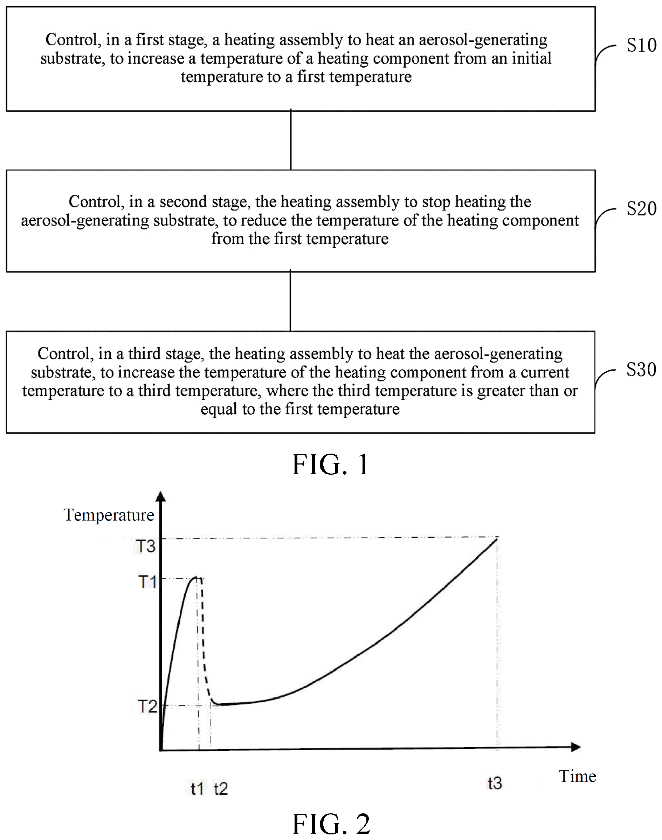

FIG. 1 is a flowchart of a heating control method for a heat not burn apparatus according to Embodiment 1 of the present disclosure. The heating control method for the heat not burn device in this embodiment is applied to a control assembly 4 in the heat not burn device. It should be understood that the heat not burn device further includes a heating assembly 11 and a battery assembly 3. The battery assembly 3 is configured to supply power to the heating assembly 11. The battery assembly 3 may be a battery, for example, a rechargeable lithium-ion battery, a nickel metal hydride battery, a nickel-cadmium battery, or a lithium-based battery. The heating assembly 11 is also referred to as a heater, and may adopt a plurality of forms, for example, may be a heating sheet, a heating needle, a heating rod, or a heating wire or filament. Alternatively, the heating assembly 11 may be a combination of two or more of the foregoing heating assemblies 11 in different forms.

With reference to FIG. 2, the heating control method for the heat not burn device in this embodiment specifically includes the following steps.

S10: In a first stage, control the heating assembly 11 to heat an aerosol-generating substrate, to increase a temperature of the aerosol-generating substrate from an initial temperature to the first temperature.

In this step, the first stage is a time period from 0 to t1, and this stage is a rapid temperature increase stage. In this stage, in principle, an allowable temperature is set to a temperature at which an expected volatile compound in the aerosol-generating substrate is rapidly volatilized, but is lower than a temperature of an unexpected compound having a high volatilization temperature. The first temperature ranges from 250 °C to 500 °C under a normal air pressure and a normal ambient temperature. As shown in FIG. 2, the temperature of the aerosol-generating substrate is rapidly increased with time in a curved shape in the first stage. In an implementation, the normal air pressure may be a standard atmospheric pressure, and the normal temperature ranges from 15 degrees Celsius to 25 degrees Celsius.

S20: In a second stage, control the heating assembly 11 to stop heating the aerosol-generating substrate, to reduce the temperature of the aerosol-generating substrate from the first temperature.

Optionally, in the second stage, the heating assembly 11 may be controlled to stop heating the aerosol-generating substrate for a preset duration, to reduce the temperature of the aerosol-generating substrate from the first temperature by natural cooling. Alternatively, the heating assembly 11 may be controlled to stop heating the aerosol-generating substrate, until the temperature of the aerosol-generating substrate is reduced from the first temperature to a second temperature. The second stage ends when the temperature of the aerosol-generating substrate reaches the second temperature.

In this step, the second stage is a time period from t1 to t2, and this stage is a rapid temperature reduction stage. In this stage, in principle, volatilization consistency of the compounds is expected, and the temperature of the aerosol-generating substrate is naturally reduced by stopping power supply, to rapidly reduce the temperature, thereby reducing an atomization temperature, and avoiding an impact caused by burn-out to a taste when the atomization temperature continues to be increased. Therefore, during reduction, a balance needs to be achieved between the volatilization consistency of the compounds and a comfortable atomization temperature. As shown in FIG. 2, the temperature of the aerosol-generating substrate is rapidly reduced with time in a curved shape in the second stage.

S30: In a third stage, control the heating assembly 11 to heat the aerosol-generating substrate, to increase the temperature of the aerosol-generating substrate from a current temperature to a third temperature. The third temperature is greater than or equal to the first temperature.

In this step, the third stage is a time period from t2 to t3, and this stage is a temperature increase stage. In this stage, in principle, reasonable volatilization of the compounds is expected, to ensure volatilization consistency of the taste of the apparatus. As shown in FIG. 2, the temperature of the aerosol-generating substrate is increased with time in a curved shape in the third stage, and an increasing trend of the temperature in this stage is less than an increasing trend of the temperature in the first stage.

In this embodiment, it should be noted that the selected first temperature and second temperature can ensure that the heat not burn device continuously generates an aerosol in the first stage, the second stage, and the third stage. In addition, the first temperature, the second temperature, and the third temperature may all be determined based on a temperature range corresponding to a volatilization temperature of an aerosol-generating material in the substrate.

In this embodiment, the heating assembly 11 is controlled to stop heating the aerosol-generating substrate in the second stage, to reduce the temperature of the aerosol-generating substrate from the first temperature, so that burn-out can be avoided, and it can be ensured that the aerosol-generating substrate continuously generates an aerosol at an optimal temperature in an entire inhaling process. In addition, the temperature is increased again in the third stage, to increase a thermal conduction rate from the heating assembly 11 to the aerosol-generating substrate. Therefore, delivery of a time-invariant aerosol whose characteristic remains unchanged can be provided.

In some embodiments, the heating control method for the heat not burn device in the present disclosure further includes:
controlling the heating assembly 11 to heat the aerosol-generating substrate, to maintain the temperature of the aerosol-generating substrate within a preset allowable temperature range in the first stage and the third stage; and controlling the heating assembly 11 to stop heating the aerosol-generating substrate, to maintain the temperature of the aerosol-generating substrate within the preset allowable temperature range in the second stage.

It may be understood that, regardless of whether the preset duration or the second temperature is set, it needs to be ensured that a temperature of the heating assembly 11 in the second stage is also maintained within the preset allowable temperature range.

In this embodiment, the allowable temperature range depends on the aerosol-generating substrate. The aerosol-generating substrate releases some volatile compounds at different temperatures. A part of the volatile compounds released from the aerosol-generating substrate are formed only through heating, and each of the volatile compounds is released when a temperature exceeds a particular release temperature thereof. A maximum operating temperature is controlled to be lower than release temperatures of a part of the volatile compounds, so that release or formation of these components can be avoided. The maximum operating temperature is further selected to ensure that the substrate is not burned in a normal operating condition.

The allowable temperature range has an upper limit ranging from 450 °C to 500 °C and a lower limit ranging from 250 °C to 300 °C. The first temperature may range from 300 °C to 450 °C. In addition, a duration of the first stage is less than 20 seconds. A duration of the second stage is less than 2 seconds. The third stage extends from the end time t2 of the second stage to a time point of 600 seconds. Preferably, when a heating manner for the heat not burn device is infrared heating, the duration of the first stage is less in comparison with that in another heating manner, and may be less than 10 seconds.

In an optional embodiment, in the second stage and the third stage, the following manner is used to control the heating assembly 11 to heat the aerosol-generating substrate, so that the temperature of the aerosol-generating substrate reaches a target temperature (corresponding to the second temperature in the second stage, and corresponding to the third temperature in the third stage):
detecting the temperature of the aerosol-generating substrate, to obtain a temperature detection value;
performing PID calculation on the temperature detection value and the target temperature, to obtain first heating control information; and
controlling, based on the first heating control information, the heating assembly 11 to perform periodic heating.

In this embodiment, the temperature of the aerosol-generating substrate is first detected, and then the temperature detection value and the target temperature are used as inputs of PID. The first heating control information is outputted through PID calculation, and finally, the first heating control information is converted into a heating duty cycle value by using a preset internal algorithm, and periodic heating is performed on the heating assembly 11.

In another optional embodiment, in the first stage and the third stage, the following manner is used to control power supply to the heating assembly 11, so that the temperature of the aerosol-generating substrate reaches a target temperature (corresponding to the second temperature in the second stage, and corresponding to the third temperature in the third stage):
detecting a resistance of the heating assembly 11 to obtain a resistance detection value;
performing PID calculation on the resistance detection value and a target resistance, to obtain second heating control information, where the target resistance is determined based on a corresponding target temperature; and
controlling, based on the second heating control information, the heating assembly 11 to perform periodic heating.

In this embodiment, the resistance of the heating assembly 11 is first detected, and then the resistance detection value and the target resistance (which is obtained by performing inverse calculation on the target temperature) are used as inputs of PID. The second heating control information is outputted through PID calculation, and finally, the second heating control information is converted into a heating duty cycle value by using a preset internal algorithm, and periodic heating is performed on the heating assembly 11.

Two implementations in which heating control is performed on the heating assembly 11 in the second stage and the third stage are described above. For the first stage (the rapid temperature increase stage), in some other implementations, to further shorten a preheating duration, a constant power or a maximum power may be used for heating within a preset initial duration, and then PID adjustment is performed, so that the temperature in the first stage reaches the first temperature, thereby avoiding possible severe overadjustment. In other words, when heating control is performed on the heating assembly 11 in the first stage, integral adjustment is not performed within the preset initial duration. Alternatively, when a difference between the temperature detection value and the target temperature value is greater than a set value, an integral item is not taken into account. In this way, an impact of the integral item during temperature increasing can be reduced, and smooth transition of a temperature control stage can be achieved.

In addition, during heating control performed on the heating assembly 11, if heating control is performed in each heating cycle, when a large heating cycle is selected, a temperature change amplitude of the heating assembly 11 in a single heating cycle is large. When a small heating cycle is selected, although a temperature change amplitude of the heating assembly 11 in a single heating cycle is small, limited by performance of a microprocessor for performing PID control, requirements on real-time data collection and processing may not be satisfied. Therefore, during actual control, a control cycle may be set to be an integer multiple of the heating cycle, that is, control cycle = heating cycle * N, where N is an integer, and N > = 1. In this way, synchronization of heating and control can be effectively ensured.

Further, in an optional embodiment, the temperature detection value may be obtained in the following manner:
detecting the resistance of the heating assembly 11 in a stop time period of the heating cycle of the heating assembly 11, to obtain the resistance detection value; and
determining the temperature detection value of the aerosol-generating substrate based on the resistance detection value.

In this embodiment, it should be first noted that, because the heating assembly 11 performs periodic heating control based on a duty cycle signal, each heating cycle includes two parts, namely, a heating time period and the stop time period, and the resistance of the heating assembly 11 is detected in the stop time period. After the resistance detection value is obtained, the temperature detection value corresponding to the resistance detection value is calculated based on a correspondence between the resistance and the temperature.

Further, after the temperature detection value of the aerosol-generating substrate is determined based on the resistance detection value, the manner further includes: performing compensation processing on the temperature detection value based on a cold/hot machine state of the heating assembly 11, to implement compensation processing on the first temperature.

In this embodiment, it should be first noted that, when there is field distribution of the temperature of the heating assembly 11, as a heating duration increases, and heat conduction of a substrate of the heating assembly 11 increases, when the resistance is the same, there is a process in which the temperature decreases. This process is correlated to the heat conduction of the substrate of the heating assembly 11. In other words, when the heating assembly 11 is in the hot machine state, a volatilization state thereof is different from that in the cold machine state. To achieve the balance between the volatilization consistency of the compounds and the comfortable atomization temperature, a compensation algorithm is added inside. The algorithm is for a temperature decrease caused by heat conduction, and related items are time and the target temperature. To be specific, actual temperature detection value T = F (R_{Heater}) + f (t, T_{Target}). In this way, it can be ensured that an entire inhaling stage is basically consistent with the cold machine state. R_{Heater} is a current resistance of a heating body 112. t is a duration from reception of a start signal to current time. T is a current target temperature. Other parameters in F (R_{Heater}) and f(t, T_{Target}) are obtained through linear fitting or quadratic fitting.

Further, the heating control method for the heat not burn device in the present disclosure further includes:
performing compensation processing on the first temperature and/or the second temperature based on the ambient temperature; or dynamically adjusting a duration (a preset duration) of the second stage based on the ambient temperature.

In this embodiment, when the external ambient temperature changes, to maintain experience of a product in the inhaling stage, compensation processing also needs to be performed on the target temperature (the first temperature and/or the second temperature). For example, when the ambient temperature is low in the winter (for example, the ambient temperature is less than 15 degrees Celsius), the target temperature is increased to maintain a temperature during inhaling into a mouth. When the temperature is high in the summer (for example, the ambient temperature is greater than 25 degrees Celsius), the target temperature is reduced to maintain a temperature during inhaling into the mouth.

Optionally, when the ambient temperature changes, to maintain experience of the product in the inhaling stage, the time t2 of the second phase may also be dynamically adjusted. For example, when the ambient temperature is low in the winter, t2 is reduced, to avoid excessively rapid temperature reduction, and maintain the temperature during inhaling into the mouth. When the temperature is high in the summer, t2 is increased to maintain the temperature during inhaling into the mouth.

Further, to improve safety performance during use, the heating control method for the heat not burn device in the present disclosure further includes:
determining whether the temperature detection value falls within a preset range, and when the temperature detection value does not fall within the preset range, controlling the heating assembly 11 to stop heating, where an upper limit of the preset range ranges from 450 °C to 500 °C, and a lower limit of the preset range ranges from 250 °C to 300 °C; or
determining whether power supply to the heating assembly 11 exceeds a preset power value in a preset time period, and when the power supply exceeds the preset power value, controlling the heating assembly 11 to stop heating.

In this embodiment, in an entire temperature control stage, the temperature value is deduced by detecting the resistance of the heating assembly 11 in real time. When the resistance detection value or the temperature detection value of the heating assembly 11 exceeds a specified upper limit and a specified lower limit in an abnormal case, the apparatus is shut down in emergency, thereby avoiding a safety risk. In addition, when the power supply to the heating assembly 11 in the preset time period (a unit duration) is greater than preset power under the ambient temperature, the apparatus may also shut down in emergency, thereby avoiding a safety risk. For example, the power supply to the heating assembly 11 normally ranges from 0.5 W to 2.0 W. When the power supply exceeds 3.0 W in the preset time period (for example, from 1 S to 5 S), the apparatus is shut down in emergency.

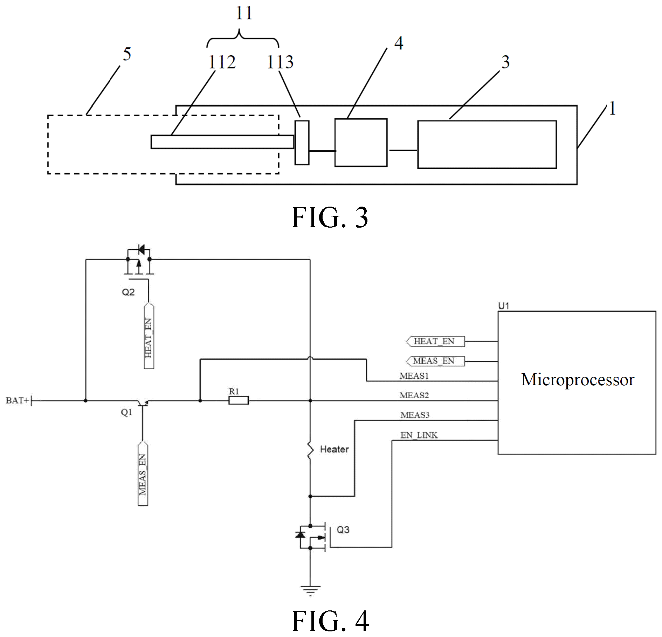

FIG. 3 is a diagram of a structure of the heat not burn device according to Embodiment 1 of the present disclosure. The heat not burn device in this embodiment includes a shell 1, the heating assembly 11 accommodated in the shell 1, the control assembly 4, and the battery assembly 3 configured to supply power to the heating assembly 11. The control assembly 4 is configured to perform the foregoing heating control method for the heat not burn device. In this implementation, an aerosol-generating substrate 5 is at least partially inserted into the shell 1 from one end of the shell 1, and the heating assembly 11 is inserted into the interior of the aerosol-generating substrate 5 to perform heating. The heating assembly 11 includes the heating body 112 and a base 113 configured to fix the heating body 112. The aerosol-generating substrate 5 may be cylindrical. Specifically, the aerosol-generating substrate 5 may include a solid material in a form of filaments, sheets, particles or an integrally formed body, which is made of plant leaves and/or stems, and a flavor component may be further added to the solid material.

Optionally, a heating manner of the heating component includes, but is not limited to, resistive heating, infrared heating, and the like. A specific structure of the heating component is determined based on the corresponding heating manner.

In this embodiment, the heating assembly 11 is controlled to stop heating the aerosol-generating substrate 5 in the second stage, to reduce the temperature of the aerosol-generating substrate 5 from the first temperature, so that burn-out can be avoided, and it can be ensured that the aerosol-generating substrate 5 continuously generates an aerosol at an optimal temperature in an entire inhaling process. In addition, the temperature is increased again in the third stage, to increase a thermal conduction rate from the heating assembly 11 to the aerosol-generating substrate 5. Therefore, delivery of a time-invariant aerosol whose characteristic remains unchanged can be provided.

Further, the control assembly 4 includes a detection module and a microprocessor. The detection module is configured to detect the temperature/resistance of the aerosol-generating substrate, to obtain the temperature/resistance detection value. The microprocessor is configured to perform PID calculation on the temperature/resistance detection value and the target temperature/target resistance, to obtain the heating control information, and control, based on the heating control information, the heating assembly 11 to perform periodic heating. The target resistance is determined based on the target temperature.

FIG. 4 is a circuit diagram of a heat not burn device according to Embodiment 1 of the present disclosure. The heat not burn device in this embodiment includes the heating assembly Heater, the battery assembly (not shown), and the control assembly, and the control assembly includes the microprocessor U1 and the detection module. The detection module includes a first switch tube Q1, a second switch tube Q2, a third switch tube Q3, and a reference resistance R1. A first end of the first switch tube Q1 and a first end of the second switch tube Q2 are respectively connected to a positive terminal BAT+ of the battery assembly. A second end of the first switch tube Q1 is connected to a first end of the reference resistance R1. A second end of the reference resistance R1 and a second end of the second switch tube Q2 are respectively connected to a first end of the heating assembly Heater. A second end of the heating assembly Heater is connected to a first end of the third switch tube Q3. A second end of the third switch tube Q3 is connected to the ground. A first input end of the microprocessor U1 is connected to the second end of the first switch tube Q1. A second input end of the microprocessor U1 is connected to the second end of the reference resistance R1. A third input end of the microprocessor U1 is connected to the second end of the heating assembly Heater. A first output end of the microprocessor U1 is connected to a control end of the first switch tube Q1. A second output end of the microprocessor U1 is connected to a control end of the second switch tube Q2. A third output end of the microprocessor U1 is connected to a control end of the third switch tube Q3.

In addition, in this embodiment, the first switch tube Q1 is an NPN-type triode, the first end of the first switch tube Q1 is a collector, the second end of the first switch tube Q1 is a transmitter, and the control end of the first switch tube Q1 is a base. The second switch tube Q2 is a P-type field effect transistor, the first end of the second switch tube Q2 is a source, the second end of the second switch tube Q2 is a drain, and the control end of the second switch tube Q2 is a gate. The third switch tube Q3 is an N-type field effect transistor, the first end of the third switch tube Q3 is a drain, the second end of the third switch tube Q3 is a source, and the control end of the third switch tube Q3 is a gate. It should be understood that, in another embodiment, the three switch tubes may alternatively be other types of switch tubes.

An operating principle of the circuit is described below.

It should be first noted that the reference resistance R1 is a high precision resistance. To be compatible with measurement precision and a heat generation amount of the reference resistance R1, a resistance of R1 generally ranges from one time of R_{Heater} to ten times of R_{Heater}. An output voltage of the battery assembly ranges from 2.8 V to 4.2 V.

When the microprocessor U1 controls the second switch tube Q2 and the third switch tube Q3 to be turned on and simultaneously controls the first switch tube Q1 to be turned off, the battery assembly forms a heating path by using the second switch tube Q2, the heating assembly Heater, and the third switch tube Q3, to heat the heating assembly Heater. In addition, the microprocessor U1 may approximate a current I of the heating path by collecting a voltage of the third input end, that is, I = VMEAS3 / R_{Q3}. R_{Q3} is an internal resistance of the third switch tube Q3 when the third switch tube Q3 is turned on. VMEAS3 is the voltage of the third input end of the microprocessor U1. Therefore, whether an overcurrent occurs may be determined based on the current I, and overcurrent protection is performed when the overcurrent occurs.

When the microprocessor U1 controls the first switch tube Q1 and the third switch tube Q3 to be turned on and simultaneously controls the second switch tube Q2 to be turned off, the battery assembly forms a resistance measurement path by using the first switch tube Q1, the reference resistance R1, the heating assembly Heater, and the third switch tube Q3. In this case, a voltage V1 is formed on the reference resistance R1, and a voltage V2 is formed on the heating assembly Heater. The microprocessor U1 determines V1 by collecting voltages of the first input end and the second input end of the microprocessor U1, that is, V1 = MEAS1 - MEAS2. The microprocessor U1 determines V2 by collecting voltages of the second input end and the third input end of the microprocessor U1, that is, V2 = MEAS2 - MEAS3. Then, the resistance R_{Heater} of the heating assembly Heater is deduced according to the following formula, that is, R_{Heater} = (MEAS2 - MEAS3) * R1 / (MEAS1 - MEAS2). MEAS1 is the voltage of the first input end of the microprocessor U1, and MEAS2 is the voltage of the second input end of the microprocessor U1.

It should be further noted that, in a single heating cycle, the microprocessor U1 controls, according to turn-on time of the duty cycle, enabling of the second switch tube Q2, thereby implementing heating control of the heating assembly. In a turn-off stage of the second switch tube Q2, a part or all of a duration in the turn-off stage may be selected to control enabling of the first switch tube Q1, to deduce R_{Heater}. To avoid large change fluctuation of the temperature of the aerosol-generating substrate in a process in which the second switch tube Q2 is turned on, forbidden, and turned on, a duration of the single heating cycle may be selected to range from 1 mS to 50 mS.

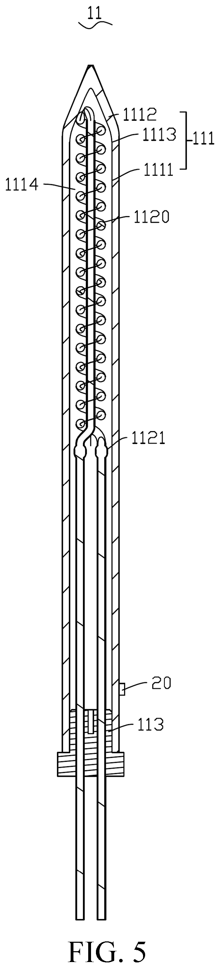

FIG. 5 is a schematic diagram of a structure of a heating assembly in an infrared heating manner. The heating assembly may be partially inserted into an aerosol-generating substrate. Specifically, the heating assembly may be at least partially inserted into a medium segment of the aerosol-generating substrate, and generate infrared light in an energized state to heat the medium segment of the aerosol-generating substrate, so that the aerosol-generating substrate generates an aerosol when being heated.

In some embodiments, as shown in FIG. 5, the detection module of the control assembly 4 is a temperature measurement element 20 disposed on a housing 111 of the heating assembly 11, and the temperature measurement element 20 may be a thermocouple for temperature measurement, or a resistor circuit with TCR. When a current passes through, a corresponding resistance is detected to represent a temperature of a heating body 112, and further represent a temperature of the aerosol-generating substrate. In addition, during actual use, even though the heating assembly 11 is not inserted into the aerosol-generating substrate, the temperature of the heating assembly 11 after power-on can still be controlled according to a corresponding temperature control curve in the present disclosure.

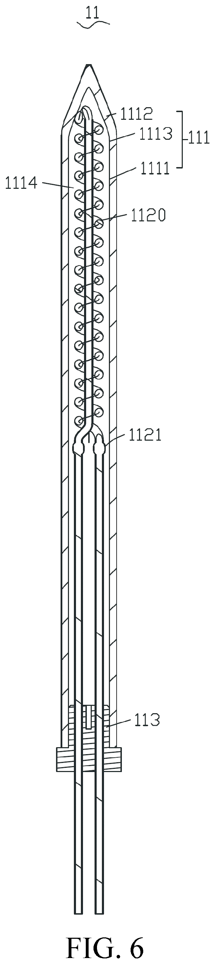

As shown in FIG. 5 to FIG. 7, in this embodiment, the heating assembly 11 adopts a central heating structure. To be specific, the heating assembly 11 in a use state is located at a center of the aerosol-generating substrate. The heating assembly 11 includes the heating body 112, the housing 111, and a base 113. The heating body 112 is at least partially disposed spaced away from the housing 111. The heating body 112 is located in the housing 111. At least a part of the housing 111 is configured to be inserted into the aerosol-generating substrate. The heating body 112 is energized and heated and generates infrared light. For example, a gap 1114 is reserved between the housing 111 and the heating body 112. The gap 1114 may be filled with air. To be specific, air inside the housing circulates with air outside the housing. Certainly, it may be understood that, in some other embodiments, the gap 1114 may alternatively be filled with reducing gas or inert gas. In this case, the interior of the housing is a sealed space. The housing 111 accommodates at least a part of the heating body 112, and can allow the infrared light generated by the heating body 112 to pass through, to heat the aerosol-generating substrate. Specifically, the housing 111 may allow the infrared light generated by the heating body 112 to pass through, so that at least a part of the infrared light generated by the heating body 112 is absorbed by the aerosol, thereby heating the aerosol-generating substrate. The base 113 is disposed at an opening 1110 of the housing 111.

In this embodiment, the housing 111 may be made of a glass material. For example, the housing 111 may be quartz glass. Alternatively, in some other embodiments, the housing 111 is not limited to quartz glass, and may be another window material that allow the infrared light to pass through, such as transparent infrared glass, transparent ceramic, or diamond.

In this embodiment, the housing 111 is a hollow tube, that is, a tube made of transparent quartz glass. The housing 111 adopts a longitudinal structure and has two end portions distributed along an axial direction. The longitudinal structure means that a dimension of the housing 111 along one direction (for example, a length direction) is greater than a dimension of the housing 111 along the other direction (for example, a thickness direction). Specifically, the housing 111 includes a tubular body 1111 having a circular cross section and a pointed-top structure 1112 disposed at one end of the tubular body 1111. Certainly, it may be understood that, in some other embodiments, the cross section of the tubular body 1111 is not limited to be circular. The tubular body 1111 adopts a hollow structure provided with the opening 1110 at one end. The pointed-top structure 1112 is disposed at one end of the tubular body 1111 that is away from the opening 1110. Disposition of the pointed-top structure 1112 facilitates at least a part of the heating assembly 11 being inserted into the aerosol-generating substrate. In this embodiment, a first accommodating cavity 1113 is formed on an inner side of the housing 111, and the first accommodating cavity 1113 is a cylindrical cavity. In this implementation, the tubular body 1111 is a cylinder, and the pointed-top structure 1112 is a cone. In another implementation, the housing 111 may alternatively be in another form, such as a triangular prism, a cuboid, or another shape. In some other embodiments, the heating body 112 may alternatively be disposed spaced away on an outer circumference of the housing 111, and a second accommodating cavity for accommodating the aerosol-generating substrate may be formed on an inner side of the housing 111.

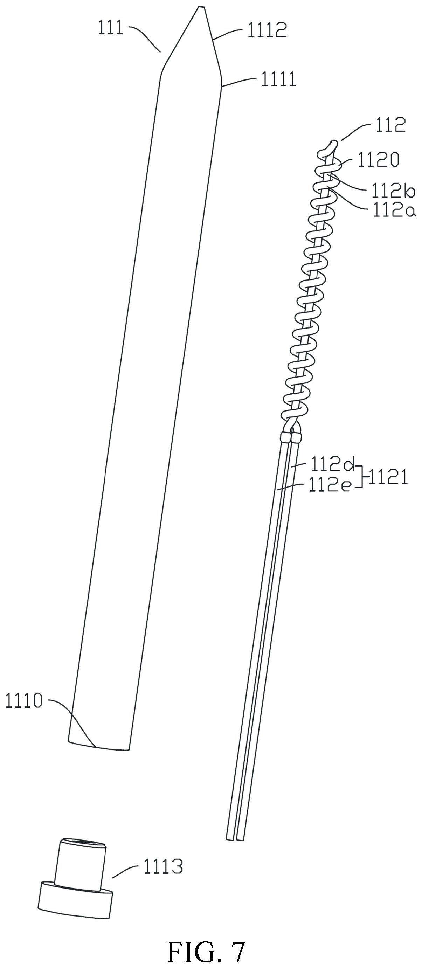

As shown in FIG. 7, in this embodiment, there may be one heating body 112. The heating body 112 may be disposed lengthwise, and has a first free end 112d and a second free end 112e. In this embodiment, the heating body 112 is a strip (a solid round wire) having a circular cross section. The heating body 112 is at least partially bent, to integrally form a cylindrical heating portion 1120. Specifically, the heating body 112 may be bent to form a spirally cylindrical heating portion 1120. It may be understood that, in some other embodiments, the heating body 112 is not limited to a strip, and may be in a form of an elongated sheet or mesh. The heating portion 1120 is not limited to a cylindrical shape, and may alternatively be in a sheet shape, a mesh shape, or a strip shape. In some embodiments, the heating body 112 may be wrapped to form a heating portion 1120 having a single-spiral shape, a double-spiral shape, an M-shape, an N-shape, or another shape. Certainly, it may be understood that, in some other embodiments, the heating body 112 is not limited to one heating body 112, and there may be two or more heating bodies 112. It should be noted that, in some other embodiments, the heating body 112 may alternatively be a metal sheet or a metal needle.

In this embodiment, the heating portion 1120 includes a first heating portion 112a and a second heating portion 112b. One end of the first heating portion 112a and one end of the second heating portion 112b are connected to each other. In this embodiment, the first heating portion 112a and the second heating portion 112b are of an integrally formed structure, and may be formed by bending one heating body 112. It may be understood that, in some other embodiments, the first heating portion 112a and the second heating portion 112b may alternatively of a separate structure. The first heating portion 112a and the second heating portion 112b each may be two heating bodies 112 that are connected through welding, riveting, or the like. It may be understood that, in some other embodiments, the second heating portion 112b may be omitted, and is replaced with a conductive rod that does not generate heat.

In this embodiment, one end of the heating portion 1120 is provided with a conductive portion 1121. The conductive portion 1121 is connected to the heating portion 1120, may be introduced from one end of the housing 111, and may penetrate through the base 113 to be electrically connected to a power supply assembly in the control assembly. In this embodiment, there may be two conductive portions 1121. The two conductive portions 1121 may be disposed spaced away, separately connected to the heating portion 1120, and penetrate through the housing 111 from a same end of the housing 111. In this embodiment, the conductive portion 1121 may be fixed to the heating portion 1120 through welding. Certainly, it may be understood that, in some other embodiments, the heating portion 1120 may be integrally formed with the conductive portion 1121, and the first free end 112d and the second free end 112e of the heating body 112 may separately form the two conductive portions 1121. In other words, the first free end 112d of the first heating portion 112a forms one of the conductive portions 1121. The second free end 112e of the second heating portion 112b forms the other conductive portion 1121. In some other embodiments, the conductive portion 1121 may be a leading wire having a resistance less than that of the heating portion, for example, a leading wire made of a silver material or an aluminum material, and the conductive portion 1121 may be welded to the heating portion 1120. Certainly, it may be understood that, in some other embodiments, the conductive portion 1121 is not limited to the leading wire, and may be another conductive structure.

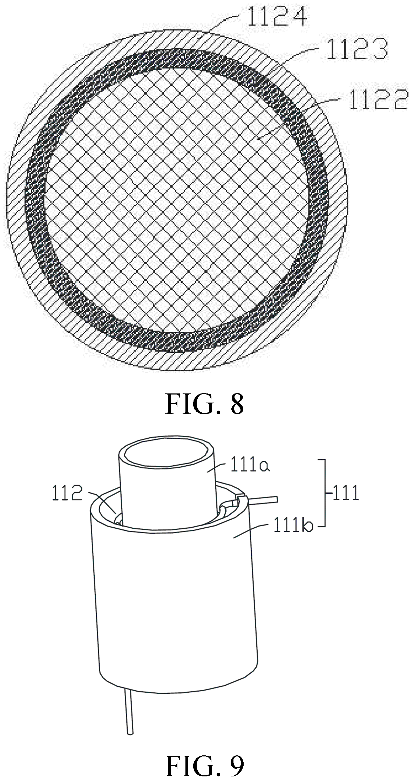

As shown in FIG. 8, in this embodiment, the heating portion 1120 includes a heating substrate 1122 and an infrared radiation layer 1124. The heating substrate 1122 may generate heat in an energized state. The infrared radiation layer 1124 is coated on an outer surface of the heating substrate 1122. The heating substrate 1122 may activate, when energized, the infrared radiation layer 1124 to generate and radiate infrared light. In this embodiment, the heating substrate 1122 and the infrared radiation layer 1124 are distributed in a concentric circle on a cross section of the heating portion 1120.

In this embodiment, the heating substrate 1122 as a whole may be in a strip shape, and may have a circular cross section. Specifically, the heating substrate 1122 may be a heating wire. Certainly, it may be understood that, in some other embodiments, the heating substrate 1122 may alternatively be in a sheet shape, that is, the heating substrate 1122 may be a heating sheet. The heating substrate 1122 includes a metal substrate having a high-temperature anti-oxidation property, and the metal substrate may be a metal wire. Specifically, the heating substrate 1122 may be a metal material having a good high-temperature anti-oxidation property, high stability, and low tendency to deform, such as a nickel-chromium alloy substrate (for example, a nickel-chromium alloy wire) or an iron-chromium-aluminum alloy substrate (for example, an iron-chromium-aluminum alloy wire). In this embodiment, a radial dimension of the heating substrate 1122 may range from 0.15 mm to 0.8 mm. The metal wire may be bent or wrapped into various shapes such as a spiral, a mesh, an M shape, or an N shape, and the bent or wrapped heating body as a whole is in a cylindrical shape, a spiral segment, a mesh shape, or another three-dimensional or planar shape with bending.

In this embodiment, the heating portion 1120 further includes an anti-oxidation layer 1123, and the anti-oxidation layer 1123 is formed between the heating substrate 1122 and the infrared radiation layer 1124. Specifically, the anti-oxidation layer 1123 may be an oxide film. High-temperature heat treatment is performed on the heating substrate 1122 and a dense oxide film is formed on a surface of the heating substrate 1122. The oxide film forms the anti-oxidation layer 1123. Certainly, it may be understood that, in some other embodiments, the anti-oxidation layer 1123 is not limited to including the oxide film formed on the anti-oxidation layer 1123. In some other embodiments, the anti-oxidation layer 1123 may be an anti-oxidation coating coated on an outer surface of the heating substrate 1122. The anti-oxidation layer 1123 is formed, so that it can be ensured that the heating substrate 1122 is not or rarely to be oxidized when being heated in an air environment, thereby improving stability of the heating substrate 1122. Further, it is unnecessary to perform vacuum pumping on or fill reducing gas in the first accommodating cavity 1113, thereby simplifying an assembly process of the entire heating assembly 11 and reducing manufacturing costs. In this embodiment, the thickness of the anti-oxidation layer 1123 may be selected to range from 1 um to 150 um. When the thickness of the anti-oxidation layer 1123 is less than 1 um, the heating substrate 1122 is easily oxidized. When the thickness of the anti-oxidation layer 1123 is greater than 150 um, heat transfer between the heating substrate 1122 and the infrared radiation layer 1124 may be seriously affected.

In this embodiment, the infrared radiation layer 1124 may be an infrared layer. The infrared layer may be an infrared layer forming substrate that is formed, under high-temperature heat processing, on a side of the anti-oxidation layer 1123 away from the heating substrate 1122. In this embodiment, the infrared layer forming substrate may be silicon carbide, spinel, or a composite substrate thereof.

Certainly, it may be understood that, in some other embodiments, the infrared radiation layer 1124 is not limited to be the infrared layer. In some other embodiments, the infrared radiation layer 1124 may be a composite infrared layer. In this embodiment, the infrared layer may be formed on the side of the anti-oxidation layer 1123 away from the heating substrate 1122 in a manner such as dipping, spraying, or brushing. A thickness of the infrared radiation layer 1124 may range from 10 um to 300 um. When the thickness of the infrared radiation layer 1124 ranges from 10 um to 300 um, an infrared effect thereof is good, so that atomization efficiency and ab atomization taste of the aerosol-generating substrate 200 are good. Certainly, it may be understood that, in some other embodiments, the thickness of the infrared radiation layer 1124 is not limited to range from 10 um to 300 um.

In this embodiment, different from a heating body in an existing electronic atomization apparatus, a maximum operating temperature range of the heating body 112 may be from 500 °C to 1300 °C. To be specific, in an entire operating period, the maximum operating temperature of the heating body 112 may be any temperature ranging from 500 °C to 1300 °C. A specific temperature may be determined based on a temperature control requirement. However, a maximum operating temperature of the heating body in the existing technology is usually below 400 °C.

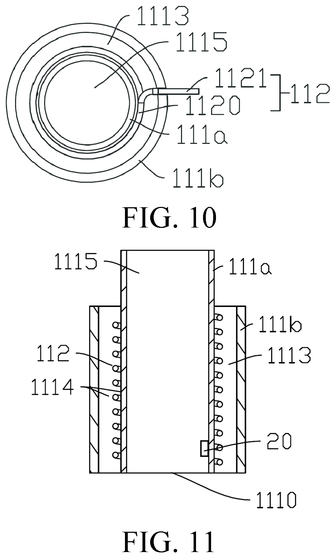

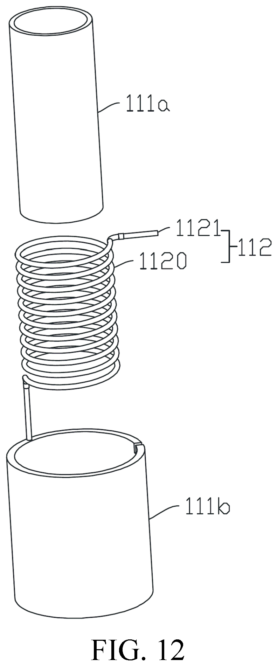

FIG. 9 to FIG. 12 show a structure of a heating assembly according to Embodiment 2 of the present disclosure. In this embodiment, a housing 111 includes a first tube body 111a and a second tube body 111b. The first tube body 111a adopts a hollow structure with two through ends. The first tube body 111a may be cylindrical, and an inner diameter of the first tube body 111a may be slightly greater than an outer diameter of an aerosol-generating substrate. A second accommodating cavity 1115 may be formed on an inner side of the first tube body 111a, and is configured to accommodate the aerosol-generating substrate and form a heating space for heating a medium segment of the aerosol-generating substrate. An axial length of the first tube body 111a may be greater than an axial length of the second tube body 111b. The second tube body 111b may be sleeved on an outer circumference of the first tube body 111a. The second tube body 111b may be cylindrical. A radial dimension of the second tube body 111b may be greater than a radial dimension of the first tube body 111a. In other words, a gap is reserved the second tube body 111b and the first tube body 111a. The gap may form a first accommodating cavity 1113. The first accommodating cavity 1113 is configured to accommodate a heating body 112. The heating body 112 is disposed on the outer circumference of the first tube body 111a and is disposed spaced away from an outer wall of the first tube body 111a. In some embodiments, the heating body 112 is disposed surrounding the outer circumference of the first tube body 111a, and a gap 1114 is reserved between the entire heating body 112 and an inner wall of the second tube body 111b and the outer wall of the first tube body 111a (that is, the heating body 112 is at least partially disposed spaced away from a housing 111), so that there may be a particular temperature difference between the inner wall of the first accommodating cavity 1113 and the heating body 112, thereby implementing thermal insulation. In some embodiments, a reflective layer may be provided on the inner wall of the second tube body 111b, and the reflective layer is configured to reflect heat of the heating body 112 and radiate the heat to the aerosol-generating substrate, thereby enhancing energy efficiency of heating.

In some other embodiments, the heating body 112 is not limited to being entirely disposed spaced away from the first tube body 111a or the second tube body 111b. In some other embodiments, the heating body 112 may be partially disposed spaced away from the first tube body 111a. A radial dimension of a partial segment of the heating portion 1120 may be equivalent to an outer diameter of the first tube body 111a, and the partial segment may limit a position. In some embodiments, the heating body 112 may alternatively be partially disposed spaced away from the second tube body 111b, and a radial dimension of a partial segment of the heating portion 1120 may be equivalent to the radial dimension of the second tube body 111b.

It may be understood that the foregoing embodiments show only preferred implementations of the present disclosure, and are described in detail, but are not to be construed as a limitation on the patent scope of the present disclosure.

It should be noted that a person of ordinary skill in the art may combine the foregoing technical features randomly and further make several variations and improvements without departing from the idea of the present disclosure, and the combinations, variations, and improvements all fall within the protection scope of the present disclosure. Therefore, all equivalent changes and modifications made according to the scope of the claims of the present disclosure shall fall within the scope of the claims of the present disclosure.

## Claims

1. A heating control method for a heat not burn device, wherein the heat not burn device comprises a heating assembly, and the method comprises:
controlling, in a first stage, the heating assembly to heat an aerosol-generating substrate, to increase a temperature of the aerosol-generating substrate from an initial temperature to a first temperature;
controlling, in a second stage, the heating assembly to stop heating the aerosol-generating substrate, to reduce the temperature of the aerosol-generating substrate from the first temperature; and
controlling, in a third stage, the heating assembly to heat the aerosol-generating substrate, to increase the temperature of the aerosol-generating substrate from a current temperature to a third temperature, wherein the third temperature is greater than or equal to the first temperature.

2. The heating control method for the heat not burn device of claim 1, wherein
the temperature of the aerosol-generating substrate is increased with time in a form of a curve in the first stage;
the temperature of the aerosol-generating substrate is reduced in a form of a curve in the second stage; and
the temperature of the aerosol-generating substrate is increased in a form of a curve in the third stage.

3. The heating control method for the heat not burn device of claim 1, wherein the step of controlling, in a second stage, the heating assembly to stop heating the aerosol-generating substrate, to reduce the temperature of the aerosol-generating substrate from the first temperature comprises:
controlling, in the second stage, the heating assembly to stop heating the aerosol-generating substrate for a preset duration, to reduce the temperature of the aerosol-generating substrate from the first temperature through natural cooling; or
controlling, in the second stage, the heating assembly to stop heating the aerosol-generating substrate, to reduce the temperature of the aerosol-generating substrate from the first temperature to a second temperature.

4. The heating control method for the heat not burn device of claim 1, wherein the method further comprises:
controlling the heating assembly to heat the aerosol-generating substrate, to maintain the temperature of the aerosol-generating substrate within a preset allowable temperature range in the first stage and the third stage; and
controlling the heating assembly to stop heating the aerosol-generating substrate, to maintain the temperature of the aerosol-generating substrate within the allowable temperature range in the second stage.

5. The heating control method for the heat not burn device of claim 4, wherein the allowable temperature range has an upper limit ranging from 450 °C to 500 °C and a lower limit ranging from 250 °C to 300 °C; and
the first temperature ranges from 300 °C to 450 °C.

6. The heating control method for the heat not burn device of claim 1, wherein
a duration of the first stage is less than 20 seconds;
a duration of the second stage is less than 2 seconds; and
the third stage extends from an end time of the second stage to a time point of 600 seconds.

7. A heat not burn device, comprising:
a heating assembly configured to heat an aerosol-generating substrate;
a battery assembly configured to supply electrical power to the heating assembly; and
a control assembly, wherein the control assembly is configured to:
control, in a first stage, the heating assembly to heat the aerosol-generating substrate, to increase a temperature of the aerosol-generating substrate from an initial temperature to a first temperature;
control, in a second stage, the heating assembly to stop heating the aerosol-generating substrate, to reduce the temperature of the aerosol-generating substrate from the first temperature; and
control, in a third stage, the heating assembly to heat the aerosol-generating substrate, to increase the temperature of the aerosol-generating substrate from a current temperature to a third temperature, wherein the third temperature is greater than or equal to the first temperature.

8. The heat not burn device of claim 7, wherein the heating assembly comprises a housing and a heating body, the heating body is configured to generate, when energized and heated, infrared light for heating the aerosol-generating substrate, the heating body is at least partially disposed spaced away from a housing wall of the housing, and the housing allows the infrared light to pass through.

9. The heat not burn device of claim 8, wherein the heating body is located in the housing, the heating body comprises a heating substrate and an infrared radiation layer coated outside the heating substrate, the heating body is configured to activate, when energized, the infrared radiation layer to generate the infrared light, and at least a part of the housing is configured to be inserted into the aerosol-generating substrate; or
the heating body is disposed spaced away on an outer circumference of the housing, and the interior of the housing is hollow and forms a second accommodating cavity configured to accommodate the aerosol-generating substrate.

10. The heat not burn device of claim 8, wherein the housing comprises a first tube body and a second tube body sleeved on an outer circumference of the first tube body;
a gap exists between the first tube body and the second tube body, and the gap forms a first accommodating cavity for accommodating the heating body;
the heating body is disposed on the outer circumference of the first tube body and disposed spaced away from an outer wall of the first tube body, and a second accommodating cavity configured to heat the aerosol-generating substrate is formed on an inner side of the first tube body; and
the heating body comprises a heating substrate and an infrared radiation layer coated outside the heating substrate; and the heating assembly is configured to activate, when energized, the infrared radiation layer to generate the infrared light.
